(19) Europäisches Patentamt
European Patent Office
Office européen des brevets

(11) **EP 3 748 407 A1**

(12) **EUROPEAN PATENT APPLICATION**
published in accordance with Art. 153(4) EPC

(43) Date of publication:
**09.12.2020 Bulletin 2020/50**

(51) Int Cl.:
*G02B 5/30* (2006.01)          *B29C 55/04* (2006.01)
*B29L 7/00* (2006.01)          *B29L 11/00* (2006.01)

(21) Application number: **19746681.6**

(22) Date of filing: **10.01.2019**

(86) International application number:
**PCT/JP2019/000424**

(87) International publication number:
**WO 2019/150897 (08.08.2019 Gazette 2019/32)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **02.02.2018 JP 2018016859**

(71) Applicant: **Nitto Denko Corporation**
**Ibaraki-shi, Osaka 567-8680 (JP)**

(72) Inventors:
• **HIRATA Satoshi**
  **Ibaraki-shi, Osaka 567-8680 (JP)**
• **SHIMIZU Takashi**
  **Ibaraki-shi, Osaka 567-8680 (JP)**
• **YAMAMOTO Shinji**
  **Ibaraki-shi, Osaka 567-8680 (JP)**
• **MURAOKA Atsushi**
  **Ibaraki-shi, Osaka 567-8680 (JP)**

(74) Representative: **Hoffmann Eitle**
**Patent- und Rechtsanwälte PartmbB**
**Arabellastraße 30**
**81925 München (DE)**

(54) **METHOD FOR MANUFACTURING STRETCHABLE FILM**

(57)     A production method for a stretched film of the present invention includes: obliquely stretching a film having an elongated shape by: holding left and right end portions of the film with left and right variable pitch-type clips configured to have clip pitches changing in a longitudinal direction, respectively; and changing the clip pitch of the clips on at least one side out of the left and right clips; releasing the film from the clips and cooling the film; and applying a tension of from 100 N/m to 400 N/m to the film in a lengthwise direction thereof while heating the film to from Tg-30°C to Tg-10°C by non-contact heating means.

[Fig.1]

EP 3 748 407 A1

**Description**

Technical Field

The present invention relates to a production method for a stretched film and a production method for an optical laminate .

Background Art

A circularly polarizing plate has been used in an image display apparatus, such as a liquid crystal display apparatus (LCD) or an organic electroluminescence display apparatus (OLED), for the purposes of improving its display characteristics and preventing reflection. The circularly polarizing plate is typically obtained by laminating a polarizer and a retardation film (typically a λ/4 plate) so that the absorption axis of the polarizer and the slow axis of the retardation film may form an angle of 45°. Hitherto, the retardation film has been typically produced by performing uniaxial stretching or biaxial stretching in a longitudinal direction and/or a lateral direction, and hence its slow axis is expressed in the lateral direction (widthwise direction) or longitudinal direction (lengthwise direction) of a raw film in many cases. As a result, in order to produce the circularly polarizing plate, it has been necessary to perform the following. The retardation film is cut so as to form an angle of 45° relative to its widthwise direction or lengthwise direction, and the resultant pieces are bonded one by one.

In order to solve such problem, there has been proposed a technology for expressing the slow axis of the retardation film in an oblique direction, involving stretching a film having an elongated shape in the oblique direction by: holding left and right end portions thereof (end portions in a widthwise direction) with left and right variable pitch-type clips configured to have clip pitches changing in a longitudinal direction, respectively; and changing the clip pitch of the clips on at least one side out of the left and right clips (for example, Patent Literature 1). However, at the time of take-up of the obliquely stretched film obtained by such technology on a roll, a wrinkle or a crumple sometimes occurs . In addition, at the time of bonding of the obliquely stretched film to another optical film, application unevenness of an adhesive or a pressure-sensitive adhesive or an unapplied portion sometimes occurs, and a wrinkle or a crumple sometimes occurs.

Citation List

Patent Literature

[PTL 1] JP 4845619 B2

Summary of Invention

Technical Problem

The present invention has been made in order to solve the above-mentioned problems, and an object of the present invention is to solve the above-mentioned problems occurring at the time of take-up of an obliquely stretched film and at the time of lamination thereof with another optical film.

Solution to Problem

According to one embodiment of the present invention, there is provided a production method for a stretched film, including: obliquely stretching a film having an elongated shape by: holding left and right end portions of the film with left and right variable pitch-type clips configured to have clip pitches changing in a longitudinal direction, respectively; and changing the clip pitch of the clips on at least one side out of the left and right clips; releasing the film from the clips and cooling the film; and applying a tension of from 100 N/m to 400 N/m to the film in a lengthwise direction thereof while heating the film to from Tg-30°C to Tg-10°C by non-contact heating means.

In one embodiment, the heating means is hot-air heating means .

In one embodiment, a coefficient of heat transfer from the heating means to the film is from 50 W/m·K to 500 W/m·K.

In one embodiment, the applying a tension is performed by adjusting a tension applied to the film between conveying rolls.

In one embodiment, a material for forming the film contains a polycarbonate-based resin, a polyester-based resin, a polyester carbonate-based resin, a cycloolefin-based resin, a cellulose-based resin, or a mixture thereof.

In one embodiment, the obliquely stretching a film is performed so that the film has an in-plane retardation Re(550) of from 100 nm to 180 nm.

According to another embodiment of the present invention, there is provided a production method for an optical laminate, including: obtaining a stretched film having an elongated shape by the production method; and continuously bonding an optical film having an elongated shape and the stretched film having an elongated shape with lengthwise directions of the optical film and the stretched film aligned with each other while conveying the optical film and the stretched film.

In one embodiment, the optical film is a polarizing plate, and the stretched film is a $\lambda/4$ plate.

Advantageous Effects of Invention

According to the present invention, while the obliquely stretched film is heated to a predetermined temperature, a predetermined tension is applied thereto in its lengthwise direction. Consequently, the above-mentioned problems occurring at the time of take-up of the stretched film and at the time of lamination thereof with another optical film are solved, and hence a stretched film excellent in quality can be obtained.

Brief Description of Drawings

FIG. 1 is a schematic plan view for illustrating the entire configuration of an example of a stretching apparatus that may be used in a production method of the present invention.

FIG. 2 is a schematic sectional view of a circularly polarizing plate using a retardation film obtained by the production method of the present invention.

FIG. 3 is a schematic view for illustrating a measurement method for a sagging amount.

Description of Embodiments

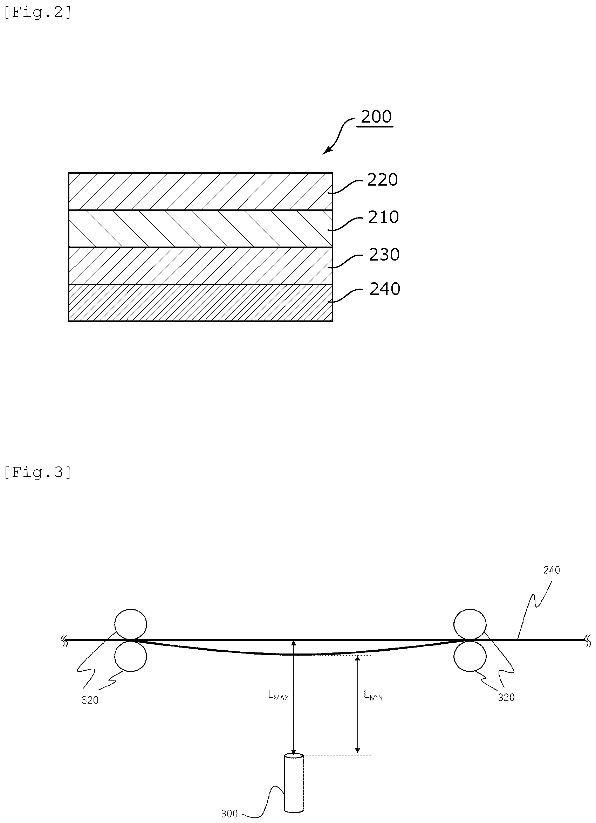

The inventors of the present invention have investigated the cause of the above-mentioned problems occurring at the time of take-up of an obliquely stretched film and at the time of lamination thereof with another optical film, and as a result, have found that: sagging occurs at one or both end portions of the stretched film in its widthwise direction during its conveyance by rolls, and the take-up or lamination of the film in a state of having the sagging leads to the occurrence of a wrinkle or a crumple; and the application of an adhesive or a pressure-sensitive adhesive to the film in a state of having the sagging leads to the occurrence of application unevenness or an unapplied portion. Specifically, as illustrated in FIG. 3, an ultrasonic displacement sensor 300 was placed below a stretched film 240 being conveyed by conveying rolls 320, and a distance from the ultrasonic displacement sensor 300 to the stretched film 240 was measured. As a result, it was found that the film had, in its widthwise direction, a portion at which the distance was shorter than specified, that is, a portion at which sagging occurred.

The cause of the occurrence of the sagging is presumed to be as described below. That is, in oblique stretching, one end portion of the film and the other end portion thereof differ from each other in, for example, the timing, number of times, and order of stretching or shrinkage, and hence the stretching processes of both end portions become asymmetric with each other with respect to the center in the widthwise direction. In addition, the thermal histories of both end portions may differ from each other. As a result, the deformation amount and characteristics of the film after the oblique stretching become nonuniform in the widthwise direction. Further, even when clips are released after the film has been fixed by being cooled to a temperature equal to or lower than its Tg, the film may be slightly shrunk at the time of the release of the clips owing to insufficient stabilization of its shape. In this case, the amount of shrinkage becomes nonuniform in the widthwise direction of the film. As a result of the foregoing, sagging may occur in the film after oblique stretching (e.g., at end portions, in particular, one end portion).

A relationship between the deformation amount of the end portion and a sagging amount was investigated in the following manner: under a state in which a film sagging at an end portion thereof was hung between conveying rolls having a roll-to-roll distance of 1,000 mm, the lengths of the end portion of the film and the central portion thereof in its widthwise direction and the sagging amount were measured. As a result, it was found that, when the length of the end portion was longer than the length (roll-to-roll distance=1,000 mm) of the portion free of sagging (central portion in the widthwise direction) by only 0.25 mm, the sagging amount reached about 10 mm. As illustrated in FIG. 3, the sagging amount (mm) was determined as a difference $(L_{MAX}-L_{MIN})$ between a maximum distance $(L_{MAX})$ and a minimum distance $(L_{MIN})$ by measuring distances from the ultrasonic displacement sensor 300 to the stretched film 240 at a plurality of points in the widthwise direction of a central portion between the rolls.

In the present invention, while an obliquely stretched film is heated to a predetermined temperature, a predetermined tension is applied thereto in its lengthwise direction. Thus, the sagging is reduced, and as a result, the above-mentioned problems due to the sagging are solved. Now, preferred embodiments of the present invention are described. However, the present invention is not limited to these embodiments.

A. Production Method for Stretched Film

A production method for a stretched film of the present invention includes: obliquely stretching a film having an elongated shape by: holding left and right end portions (end portions in a widthwise direction) of the film with left and right variable pitch-type clips configured to have clip pitches changing in a longitudinal direction, respectively; and changing the clip pitch of the clips on at least one side out of the left and right clips (oblique stretching step); releasing the film from the clips and cooling the film (releasing-cooling step); and applying a tension of from 100 N/m to 400 N/m to the film in a lengthwise direction thereof while heating the film to from Tg-30°C to Tg-10°C by non-contact heating means (tension-applying step). As used herein, the term "clip pitch in a longitudinal direction" means a distance between the centers of clips, which are adjacent to each other in the longitudinal direction, in a running direction. Now, each step is described in detail.

[Oblique Stretching Step]

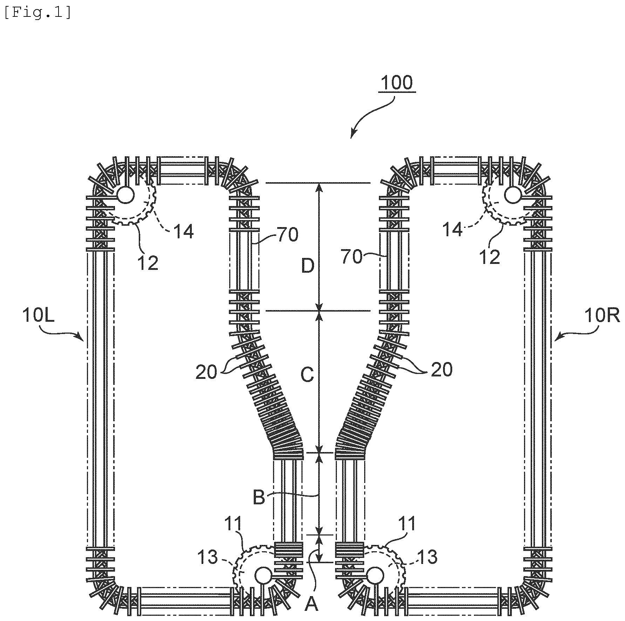

First, an example of a stretching apparatus that is applicable to the production method of the present invention is described with reference to FIG. **1.** FIG. **1** is a schematic plan view for illustrating the entire construction of the example of the stretching apparatus that may be used in the production method of the present invention. When viewed in plan view, a stretching apparatus **100** has, on both of its left and right sides, an endless loop **10L** and an endless loop **10R** each having many clips **20** for holding a film so that the loops may be bilaterally symmetric with each other. In this description, an endless loop on a left side when viewed from a film inlet side is referred to as "left endless loop **10L**" and an endless loop on a right side is referred to as "right endless loop **10R.**" Each of the clips **20** of the left and right endless loops **10L** and **10R** is guided by a reference rail **70** to cyclically move in a loop manner. The left endless loop **10L** cyclically moves in a counterclockwise direction and the right endless loop **10R** cyclically moves in a clockwise direction. In the stretching apparatus, a holding zone **A,** a preheating zone **B,** a stretching zone **C,** and a releasing zone **D** are arranged in the stated order from a sheet inlet side toward a sheet outlet side. Those zones mean zones in which the film to be stretched is substantially held, preheated, subjected to oblique stretching, and released, respectively, and do not mean mechanically or structurally independent sections. In addition, attention should be paid to the fact that a ratio among the lengths of the respective zones is different from the actual length ratio. Further, a zone (not shown) for performing any appropriate treatment may be arranged between the stretching zone **C** and the releasing zone **D** as required. Examples of such treatment include longitudinal shrinkage treatment and lateral stretching treatment.

In the holding zone **A** and the preheating zone **B,** the left and right endless loops **10L** and **10R** are configured to be substantially parallel to each other while being separated from each other by a distance corresponding to the initial width of the film to be stretched. In the stretching zone **C,** the left and right endless loops **10L** and **10R** are configured so that the distance by which the loops are separated from each other may gradually enlarge from the preheating zone **B** side toward the releasing zone **D** until the distance corresponds to the width of the film after its stretching. In the releasing zone **D,** the left and right endless loops **10L** and **10R** are configured to be substantially parallel to each other while being separated from each other by a distance corresponding to the width of the film after the stretching.

The clips (left clips) **20** of the left endless loop **10L** and the clips (right clips) **20** of the right endless loop **10R** can each independently cyclically move. For example, driving sprockets **11** and **12** of the left endless loop **10L** are rotationally driven in the counterclockwise direction by electric motors **13** and **14,** and the driving sprockets **11** and **12** of the right endless loop **10R** are rotationally driven in the clockwise direction by the electric motors **13** and **14.** As a result, a running force is imparted to a clip-carrying member (not shown) of each of drive rollers (not shown) engaging with the driving sprockets **11** and **12.** Thus, the left endless loop **10L** cyclically moves in the counterclockwise direction and the right endless loop **10R** cyclically moves in the clockwise direction. The left endless loop **10L** and the right endless loop **10R** can each independently be cyclically moved by each independently driving a left electric motor and a right electric motor.

Further, the clips (left clips) **20** of the left endless loop **10L** and the clips (right clips) **20** of the right endless loop **10R** are each of a variable pitch type. That is, the clip pitches of the left and right clips **20** and **20** in the longitudinal direction may each independently change in association with their movement. A variable pitch-type configuration may be achieved by adopting a driving mode such as a pantograph mode, a linear motor mode, or a motor/chain mode. For example, in Patent Literature 1, a link mechanism of the pantograph mode is described in detail.

A stretched film, such as a retardation film having a slow axis in an oblique direction, may be produced by obliquely stretching the film with such stretching apparatus as described above.

Specifically, in the holding zone **A** (inlet of film intake by the stretching apparatus **100**), both side edges of the film to be stretched are held with the clips **20** of the left and right endless loops **10L** and **10R** at constant clip pitches equal to each other or clip pitches different from each other, and the film is fed to the preheating zone **B** by the movement of the left and right endless loops **10L** and **10R** (substantially the movement of each of the clip-carrying members guided by the reference rail **70**).

In the preheating zone **B,** as described above, the left and right endless loops **10L** and **10R** are configured to be substantially parallel to each other while being separated from each other by a distance corresponding to the initial width of the film to be stretched, and hence the film is basically heated without being laterally stretched or longitudinally stretched. However, a distance between the left and right clips (distance in a widthwise direction) may be slightly widened in order to avoid, for example, the following inconvenience: the film sags owing to the preheating to be brought into contact with a nozzle in an oven.

In the preheating, the film is heated to a temperature T1 (°C). The temperature T1 is preferably equal to or more than the glass transition temperature (Tg) of the film, more preferably equal to or more than Tg+2°C, still more preferably equal to or more than Tg+5°C. Meanwhile, the heating temperature T1 is preferably equal to or less than Tg+40°C, more preferably equal to or less than Tg+30°C. The temperature T1 is, for example, from 70°C to 190°C, preferably from 80°C to 180°C, though the temperature varies depending on the film to be used.

A time period required for the temperature of the film to be increased to the temperature T1 and a time period for which the temperature is held at the temperature T1 may be appropriately set depending on a constituent material for the film and a condition under which the film is produced (e.g., the speed at which the film is conveyed) . The temperature increase time period and the holding time period may be controlled by adjusting, for example, the moving speeds of the clips **20,** the length of the preheating zone, and the temperature of the preheating zone.

In the stretching zone **C,** the film is obliquely stretched by changing the clip pitch in the longitudinal direction of the clips on at least one side out of the left and right clips **20.** For example, as in the illustrated example, the oblique stretching may be performed while a distance between the left and right clips (distance in the widthwise direction) is increased. Alternatively, unlike the illustrated example, the oblique stretching may be performed while the distance between the left and right clips is maintained.

In one embodiment, the oblique stretching may be performed in the following manner: under a state in which a position at which the clip pitch of the clips on one side out of the left and right clips starts to increase or reduce and a position at which the clip pitch of the clips on the other side starts to increase or reduce are set to different positions in the longitudinal direction, the clip pitch of the clips on each side is increased or reduced to a predetermined pitch.

In another embodiment, the oblique stretching may be performed in the following manner: while the clip pitch of the clips on one side out of the left and right clips is fixed, the clip pitch of the clips on the other side is increased or reduced to a predetermined pitch and then returned to the initial clip pitch.

In still another embodiment, the oblique stretching may be performed in the following manner: (i) while the clip pitch of the clips on one side out of the left and right clips is increased, the clip pitch of the clips on the other side is reduced; and (ii) the clip pitch of the clips on each side is changed so that the reduced clip pitch and the increased clip pitch become predetermined pitches equal to each other.

As specific modes for carrying out the oblique stretching, there may be preferably applied those described in Patent Literature 1, JP 2013-54338 A, JP 2014-194482 A, JP 2014-238524 A, JP 2014-194484 A, and the like.

The oblique stretching may be typically performed at a temperature T2. The temperature T2 is preferably from Tg-20°C to Tg+30°C where Tg represents the glass transition temperature of the resin film, more preferably from Tg-10°C to Tg+20°C, particularly preferably about Tg. The temperature T2 is, for example, from 70°C to 180°C, preferably from 80°C to 170°C, though the temperature varies depending on the resin film to be used. A difference (T1-T2) between the temperature T1 and the temperature T2 is preferably ±2°C or more, more preferably ±5°C or more. In one embodiment, T1>T2 and hence the film heated to the temperature T1 in the preheating zone may be cooled to the temperature T2.

The longitudinal shrinkage treatment and the lateral stretching treatment are performed after the oblique stretching. For those treatments after the oblique stretching, reference may be made to paragraphs 0029 to 0032 of JP 2014-194483 A.

[Releasing-Cooling Step]

In the releasing zone, the clips holding the film are released, and the film is cooled. The release of the clips is generally performed after the film has been cooled to a temperature equal to or lower than Tg. As required, the film is subjected to heat treatment to fix its stretched state (thermal fixing) and cooled to a temperature equal to or lower than Tg, and then the clips are released.

The film is cooled to, for example, a temperature lower than Tg-30°C, preferably equal to or lower than Tg-35°C, more preferably equal to or lower than Tg-40°C. In one embodiment, the film is cooled to a temperature lower than Tg-30°C, preferably equal to or lower than Tg-35°C, more preferably equal to or lower than Tg-40°C, and then the clips are released. In another embodiment, the clips are released under a state in which the film temperature is from Tg to Tg-30°C, and then the film is further cooled to a temperature lower than Tg-30°C, preferably equal to or lower than Tg-35°C, more preferably equal to or lower than Tg-40°C. When the stretched film is sufficiently cooled to complete the deformation of the film serving as the cause of sagging, the deformation can be adjusted to be left-right symmetric in the tension-applying step to suitably reduce sagging. In the latter embodiment, the cooling of the film after the release of the clips may be performed in the releasing zone (in other words, in the oblique stretching apparatus), or may be performed during the conveyance of the film to the tension-applying step after the film has been delivered out of the outlet of the stretching apparatus.

The heat treatment may be typically performed at a temperature T3. The temperature T3 varies depending on the film to be stretched. In some cases, T2≥T3, and in other cases, T2<T3. In general, when the film is an amorphous material, T2≥T3, and when the film is a crystalline material, a crystallization treatment may be performed by setting the T2 and the T3 so that the T2 may be lower than the T3. When T2≥T3, a difference (T2-T3) between the temperatures T2 and T3 is preferably from 0°C to 50°C. A heat treatment time is typically from 10 seconds to 10 minutes.

[Tension-applying Step]

In the tension-applying step, while the stretched film released from the clips is heated to from Tg-30°C to Tg-10°C, a tension of from 100 N/m to 400 N/m is applied thereto in its lengthwise direction . When the predetermined tension is applied in such temperature range, sagging can be reduced while changes in optical characteristics (e.g., a retardation and an axial angle) from those obtained by the oblique stretching are suppressed. In one embodiment, an amount by which sagging is reduced by the tension-applying step (sagging amount of stretched film before tension-applying step - sagging amount after tension-applying step) is, for example, 6 mm or more, preferably 8 mm or more, more preferably 10 mm or more, still more preferably 12 mm or more. In addition, the sagging amount of the stretched film after the application of the tension is preferably less than 8 mm, more preferably 6 mm or less, still more preferably 5 mm or less.

The heating of the stretched film is performed by non-contact heating means . The use of the non-contact heating means can prevent the occurrence of a wrinkle or a flaw. Examples of the non-contact heating means include hot-air heating means, near-infrared heating means, far-infrared heating means, and microwave heating means.

A coefficient of heat transfer from the heating means to the stretched film is preferably from 50 W/m·K to 500 W/m·K, more preferably from 100 W/m·K to 300 W/m·K. When the coefficient of heat transfer falls within the above-mentioned ranges, the occurrence of a wrinkle or a flaw at the time of the heating of the stretched film can be prevented. The coefficient of heat transfer may be determined as described below.

«Measurement Method for Coefficient of Heat Transfer»

The heating means of interest is changed from a room temperature ($T_{ini}$) to a predetermined set temperature ($T_{set}$) under a state in which a thermocouple is fixed to the film, and the temperature change of the film during this process is measured. The room temperature ($T_{ini}$) and the set temperature ($T_{set}$) are substituted into the following equation (1), and the equation is solved, by taking into calculation the temperature dependence of specific heat, to be deformed into the equation (2). Next, the equation (2) is fitted to data on the temperature change of the film to determine the coefficient of heat transfer.

$$\int_V \rho * C_p * \frac{\partial T}{\partial t} dV = \int_S h * (T_{set} - T) dS \,, (C_p = a * T + b) \qquad (1)$$

$$-(\rho * d) * \left[ (a * T_{set} + b) * \ln\left(\frac{T - T_{set}}{T_{ini} - T_{set}}\right) + a * (T - T_{set}) \right] = h * t \qquad (2)$$

(where, $\rho$: density [kg/m$^3$], $C_p$: specific heat [J/kgK], t: time [sec], T: film temperature [K], V: volume [m$^3$], h: coefficient of heat transfer [J/kgK], $T_{set}$: set temperature [K], $T_{ini}$: initial temperature [K], S: area [m$^2$], a, b: temperature constants of specific heat, d: film thickness [m])

The heating temperature (film temperature) is from Tg-30°C to Tg-10°C, preferably from Tg-25°C to Tg-10°C, more preferably from Tg-20°C to Tg-10°C. When the heating temperature is lower than Tg-30°C, the sagging-reducing effect may become insufficient. Meanwhile, when the heating temperature is higher than Tg-10°C, changes in optical characteristics are increased.

The tension to be applied to the stretched film is from 100 N/m to 400 N/m, and may be preferably from 120 N/m to 380 N/m, more preferably from 150 N/m to 350 N/m. When the tension falls within the above-mentioned ranges, only a portion of the film free of sagging bears the tension, with the result that, while the length of a sagging portion thereof is unchanged, the portion free of sagging is extended very slightly to have a length closer to that of the sagging portion. As a result, sagging can be suitably reduced while changes in optical characteristics and the rupture of the film are avoided. Meanwhile, when the tension is less than 100 N/m, the sagging-reducing effect may become insufficient. In addition, when the tension is more than 400 N/m, the stretched film may be ruptured.

The application of the tension is preferably performed between conveying rolls. Specifically, the tension may be applied by measuring a tension applied to the stretched film between the conveying rolls and controlling, for example, the rotation speed of each of the conveying rolls so that the tension may take a desired value. Herein, the conveying rolls encompass nip rolls, feed rolls, suction rolls, and the like.

A period of time for which the tension is applied may be appropriately set depending on a material for forming the film, a sagging amount, and the like. The period of time maybe, for example, from 5 seconds to 60 seconds.

After the completion of the application of the tension, the tension applied to the film is eliminated, and the film may be taken up on a roll in accordance with a conventional method.


B. Film to be Stretched

In the production method of the present invention, any appropriate film may be used. An example thereof is a film applicable as a retardation film. As a constituent material for such film, there are given, for example, a polycarbonate-based resin, a polyvinyl acetal-based resin, a cycloolefin-based resin, an acrylic resin, a cellulose ester-based resin, a cellulose-based resin, a polyester-based resin, a polyester carbonate-based resin, an olefin-based resin, and a polyurethane-based resin. Of those, a polycarbonate resin, a polyvinyl acetal resin, a cellulose ester-based resin, a polyester-based resin, or a polyester carbonate-based resin is preferred because a retardation film showing so-called reverse wavelength dispersion dependency can be obtained with any one of these resins. Those resins may be used alone or in combination depending on desired characteristics.

Any appropriate polycarbonate-based resin is used as the polycarbonate-based resin. A preferred example thereof is a polycarbonate resin containing a structural unit derived from a dihydroxy compound. Specific examples of the dihydroxy compound include 9,9-bis(4-hydroxyphenyl)fluorene, 9,9-bis(4-hydroxy-3-methylphenyl)fluorene, 9,9-bis(4-hydroxy-3-ethylphenyl)fluorene, 9,9-bis(4-hydroxy-3-n-propylphenyl)fluorene, 9,9-bis(4-hydroxy-3-isopropylphenyl)fluorene, 9,9-bis(4-hydroxy-3-n-butylphenyl)fluorene, 9,9-bis(4-hydroxy-3-sec-butylphenyl)fluorene, 9,9-bis(4-hydroxy-3-tert-butylphenyl)fluorene, 9,9-bis(4-hydroxy-3-cyclohexylphenyl)fluorene, 9,9-bis(4-hydroxy-3-phenylphenyl)fluorene, 9,9-bis(4-(2-hydroxyethoxy)phenyl)fluorene, 9,9-bis(4-(2-hydroxyethoxy)-3-methylphenyl)fluorene, 9,9-bis(4-(2-hydroxyethoxy)-3-isopropylphenyl)fluorene, 9,9-bis(4-(2-hydroxyethoxy)-3-isobutylphenyl)fluorene, 9,9-bis(4-(2-hydroxyethoxy)-3-tert-butylphenyl)fluorene, 9,9-bis(4-(2-hydroxyethoxy)-3-cyclohexylphenyl)fluorene, 9,9-bis(4-(2-hydroxyethoxy)-3-phenylphenyl)fluorene, 9,9-bis(4-(2-hydroxyethoxy)-3,5-dimethylphenyl)fluorene, 9,9-bis(4-(2-hydroxyethoxy)-3-tert-butyl-6-methylphenyl)fluore ne, and 9,9-bis(4-(3-hydroxy-2,2-dimethylpropoxy)phenyl)fluorene. The polycarbonate resin may contain a structural unit derived from the dihydroxy compound as well as a structural unit derived from a dihydroxy compound such as isosorbide, isomannide, isoidide, spiroglycol, dioxaneglycol, diethylene glycol (DEG), triethylene glycol (TEG), polyethylene glycol (PEG), or a bisphenol.

The details of the polycarbonate-based resin as described above are described in, for example, JP 2012-67300 A and JP 3325560 B2, the descriptions of which are incorporated herein by reference.

The glass transition temperature of the polycarbonate-based resin is preferably 110°C or more and 250°C or less, more preferably 120°C or more and 230°C or less. When the glass transition temperature is excessively low, the heat resistance of the resin tends to deteriorate, and hence the resin may cause a dimensional change after its forming into a film. When the glass transition temperature is excessively high, the forming stability of the resin at the time of its forming into a film may deteriorate. In addition, the transparency of the film may be impaired. The glass transition temperature is determined in conformity with JIS K 7121 (1987).

Any appropriate polyvinyl acetal-based resin may be used as the polyvinyl acetal-based resin. The polyvinyl acetal-based resin may be typically obtained by subjecting at least two kinds of aldehyde compounds and/or ketone compounds, and a polyvinyl alcohol-based resin to a condensation reaction. Specific examples of the polyvinyl acetal-based resin and a detailed production method therefor are described in, for example, JP 2007-161994 A, the description of which is incorporated herein by reference.

The refractive index characteristics of the retardation film obtained by stretching the film to be stretched preferably show a relationship of $nx > ny$. Further, the retardation film may preferably function as a $\lambda/4$ plate. An in-plane retardation Re (550) of the retardation film is preferably from 100 nm to 180 nm, more preferably from 135 nm to 155 nm. In this description, nx represents a refractive index in a direction in which an in-plane refractive index becomes maximum (i.e., a slow axis direction), ny represents a refractive index in a direction perpendicular to the slow axis in a plane (i.e. , a fast axis direction), and nz represents a thickness direction refractive index. In addition, Re($\lambda$) represents the in-plane retardation of the film measured with light having a wavelength of $\lambda$ nm at 23°C. Therefore, the Re (550) represents the in-plane retardation of the film measured with light having a wavelength of 550 nm at 23°C. The Re($\lambda$) is determined from the equation "Re ($\lambda$)= (nx-ny) $\times$d" where "d" represents the thickness (nm) of the film.

The in-plane retardation Re (550) of the retardation film may be caused to fall within a desired range by appropriately setting oblique stretching conditions. For example, a method of producing a retardation film having an in-plane retardation Re(550) of from 100 nm to 180 nm by oblique stretching is disclosed in detail in, JP 2013-54338 A, JP 2014-194482 A, JP 2014-238524 A, JP 2014-194484 A, or the like. Accordingly, a person skilled in the art could set appropriate oblique stretching conditions on the basis of the disclosure.

The slow axis direction of the retardation film is preferably from 30° to 60° or from 120° to 150°, more preferably from 38° to 52° or from 128° to 142°, still more preferably from 43° to 47° or from 133° to 137°, particularly preferably about 45° or about 135° with respect to the lengthwise direction of the film.

The retardation film preferably shows so-called reverse wavelength dispersion dependency. Specifically, the in-plane retardation thereof satisfies a relationship of Re(450)<Re (550)<Re (650). Re(450)/Re (550) is preferably 0.8 ormore and less than 1.0, more preferably from 0.8 to 0.95. Re(550)/Re(650) is preferably 0.8 or more and less than 1.0, more preferably from 0.8 to 0.97.

The retardation film has an absolute value of its photoelastic coefficient of preferably from $2\times10^{-12}$ (m²/N) to $100\times10^{-12}$ (m²/N), more preferably from $10\times10^{-12}$ (m²/N) to $50\times10^{-12}$ (m²/N).

C. Optical Laminate and Production Method for the Optical Laminate

The stretched film obtained by the production method of the present invention may be used as an optical laminate by being bonded to another optical film. For example, a retardation film obtained by the production method of the present invention may be suitably used as a circularly polarizing plate by being bonded to a polarizing plate.

FIG. **2** is a schematic sectional view of an example of such circularly polarizing plate. A circularly polarizing plate **200** of the illustrated example includes a polarizer **210,** a first protective film **220** arranged on one side of the polarizer **210,** a second protective film **230** arranged on the other side of the polarizer **210,** and a retardation film **240** arranged outside the second protective film **230**. The retardation film **240** is the retardation film ($\lambda$/4 plate) obtained by the production method of the present invention. The second protective film **230** may be omitted. In that case, the retardation film **240** may function as a protective film for the polarizer. An angle formed between the absorption axis of the polarizer **210** and the slow axis of the retardation film **240** is preferably from 30° to 60°, more preferably from 38° to 52°, still more preferably from 43° to 47°, particularly preferably about 45° .

The retardation film obtained by the production method of the present invention has an elongated shape and has a slow axis in an oblique direction (a direction at, for example, 45° relative to its lengthwise direction) . Inaddition, inmanycases, apolarizer having an elongated shape has an absorption axis in its lengthwise direction or widthwise direction. Therefore, the use of the retardation film obtained by the production method of the present invention enables the utilization of the so-called roll-to-roll process and enables the production of a circularly polarizing plate with extremely excellent production efficiency. The roll-to-roll process refers to a method involving continuously bonding films each having an elongated shape with their lengthwise directions aligned with each other while conveying the films with a roll.

Examples

Now, the present invention is specifically described by way of Examples. However, the present invention is not limited by Examples below. Measurement and evaluation methods in Examples are as described below.

(1) Thickness

Measurement was performed using a dial gauge (manufactured by PEACOCK, product name: "DG-205 type pds-2").

(2) Retardation Value

An in-plane retardation Re(550) was measured using Axoscan manufactured by Axometrics.

(3) Alignment Angle (Direction in which Slow Axis is expressed)

A sample was produced by cutting the central portion of a film serving as a measurement object into a square shape measuring 50 mm wide by 50 mm long so that one side of the square was parallel to the widthwise direction of the film. The sample was subjected to measurement with an on-line phase difference meter (manufactured by Oji Scientific Instruments Co., Ltd., product name: "KOBRA-WI"), and its alignment angle $\theta$ at a wavelength of 590 nm was measured.

(4) Glass Transition Temperature (Tg)

Measurement was performed in conformity with JIS K 7121.

(5) Sagging Amount

As illustrated in FIG. **3,** an ultrasonic displacement sensor was placed below the conveying path of a stretched film (central portion between conveying rolls (about 1,000 mm)), and the distance from the ultrasonic displacement sensor to the stretched film was measured at the central portion and end portions thereof in the widthwise direction. The difference **($L_{MAX}-L_{MIN}$)** between the maximum distance **($L_{MAX}$)** and the minimum distance **($L_{MIN}$)** was defined as a sagging amount (mm).

(6) Tension

A tension applied to a film was measured with a film tension detector placed in a film conveying line.

(7) Coefficient of Heat Transfer

Measurement was performed by the method described in the foregoing section [Tension-applying Step].

<Example 1>

(Production of Polyester Carbonate Resin Film)

Polymerization was performed with a batch polymerization apparatus formed of two vertical reactors each including a stirring blade and a reflux condenser controlled to 100°C. 29.60 Parts by mass (0.046 mol) of bis[9-(2-phenoxycarbonylethyl)fluoren-9-yl]methane, 29.21 parts by mass (0.200 mol) of ISB, 42.28 parts by mass (0.139 mol) of SPG, 63.77 parts by mass (0.298 mol) of DPC, and $1.19\times10^{-2}$ part by mass ($6.78\times10^{-5}$ mol) of calcium acetate monohydrate serving as a catalyst were loaded. After a first reactor had been purged with nitrogen under reduced pressure, the inside of the reactor was warmed with a heating medium, and when a temperature in the reactor reached 100°C, stirring was started. 40 Minutes after the start of the temperature increase, the temperature in the reactor was caused to reach 220°C and the reactor was controlled so as to hold the temperature, and at the same time, a pressure reduction was started. 90 Minutes after the temperature had reached 220°C, a pressure in the reactor was set to 13.3 kPa. A phenol vapor produced as a by-product of the polymerization reaction was introduced into the reflux condenser at 100°C, a monomer component present in a slight amount in the phenol vapor was returned to the reactor, and a phenol vapor that did not condense was introduced into a condenser at 45°C and recovered. Nitrogen was introduced into the first reactor to return the pressure to the atmospheric pressure once. After that, an oligomerized reaction liquid in the first reactor was transferred to a second reactor. Next, the increase of a temperature in the second reactor and the reduction of a pressure therein were started, and the temperature in the reactor and the pressure therein were set to 240°C and 0.2 kPa, respectively in 50 minutes. After that, the polymerization was caused to proceed until predetermined stirring power was achieved. When the predetermined power was achieved, nitrogen was introduced into the reactor to return the pressure to the atmospheric pressure. The produced polyester carbonate was extruded into water, and the strand was cut to provide pellets. The Tg of the resultant polyester carbonate resinwas 140 °C.
The resultant polyester carbonate resin was dried in a vacuum at 80°C for 5 hours, and was then formed into a resin film having a thickness of 135 $\mu$m with a film-forming apparatus including a single screw extruder (manufactured by Toshiba Machine Co., Ltd., cylinder preset temperature: 250°C), a T-die (width: 200 mm, preset temperature: 250°C), a chill roll (preset temperature: 120°C to 130°C), and a take-up unit.

(Oblique Stretching Step)

The polyester carbonate resin film obtained as described above was subjected to oblique stretching with such apparatus as illustrated in FIG. **1** to provide a retardation film. Specifically, the polyester carbonate resin film was preheated to 145°C in the preheating zone of the stretching apparatus. In the preheating zone, the clip pitches **($P_1$)** of the left and right clips were 125 mm. Next, simultaneously with the entry of the film into the oblique stretching zone **C,** the increase of the clip pitch of the right clips and the reduction of the clip pitch of the left clips were started. The clip pitch of the right clips was increased to $P_2$, and the clip pitch of the left clips was reduced to $P_3$. At this time, the change ratio ($P_2/P_1$) of the clip pitch of the right clips was 1.42, the change ratio ($P_3/P_1$) of the clip pitch of the left clips was 0.78, and the lateral stretching ratio of the film with respect to its original width was 1.45 times. Next, while the clip pitch of the right clips was maintained at $P_2$, the increase of the clip pitch of the left clips was started, and the clip pitch was increased from $P_3$ to $P_2$. During this period, the change ratio ($P_2/P_3$) of the clip pitch of the left clips was 1.82, and the lateral stretching ratio of the film with respect to its original width was 1.9 times. The oblique stretching was performed at 138°C.

(Releasing-Cooling Step)

Next, in the releasing zone, the film was thermally fixed by being held at 125°C for 60 seconds. The thermally fixed film was cooled to 100°C, and then the left and right clips were released. Thus, a stretched film 1a was obtained.

(Tension-applying Step)

The stretched film 1a obtained as described above was conveyed using conveying rolls into a hot-air oven and heated to Tg-20°C. Further, in the oven, through adjustment of the torque of the conveying rolls, a tension of 300 N was applied to the film hung between the conveying rolls for 15 seconds, and then the tension was eliminated. Thus, a stretched film 1b having an elongated shape was obtained. The coefficient of heat transfer of the hot-air oven with respect to the stretched film was 110 W/m·K.

<Example 2>

(Tension-applying Step)

A stretched film 2b having an elongated shape was obtained in the same manner as in Example 1 using the stretched film 1a produced in Example 1, except that the heating temperature of the stretched film in the hot-air oven was changed to Tg-15°C.

<Example 3>

(Tension-applying Step)

A stretched film 3b having an elongated shape was obtained in the same manner as in Example 1 using the stretched film 1a produced in Example 1, except that the heating temperature of the stretched film in the hot-air oven was changed to Tg-10°C.

<Example 4>

(Tension-applying Step)

A stretched film 4b having an elongated shape was obtained in the same manner as in Example 1 using the stretched film 1a produced in Example 1, except that: the heating temperature of the stretched film in the hot-air oven was changed to Tg-15°C; and the tension to be applied to the stretched film was changed to 100 N.

<Example 5>

(Tension-applying Step)

A stretched film 5b having an elongated shape was obtained in the same manner as in Example 1 using the stretched film 1a produced in Example 1, except that: the heating temperature of the stretched film in the hot-air oven was changed to Tg-15°C; and the tension to be applied to the stretched film was changed to 400 N.

<Example 6>

(Tension-applying Step)

A stretched film 6b having an elongated shape was obtained in the same manner as in Example 1 using the stretched film 1a produced in Example 1, except that the heating temperature of the stretched film in the hot-air oven was changed to Tg-30°C.

<Example 7>

A cycloolefin-based resin film having a Tg of 128°C (manufactured by Zeon Corporation, product name: "Zeonor-Film", thickness: 100 pm) was used and obliquely stretched in the same manner as in Example 1. Next, the film was thermally fixed at 100°C for 1 minute and cooled to 70°C, and then the left and right clips were released to provide a stretched film 7a. Next, a stretched film 7b having an elongated shape was obtained in the same manner as in Example 1 except that the heating temperature of the stretched film in the hot-air oven was changed to Tg-15°C.

<Comparative Example 1>

The stretched film 1a produced in Example 1 was used as it was as a stretched film c-1b having an elongated shape.

<Comparative Example 2>

(Tension-applying Step)

A stretched film c-2b having an elongated shape was obtained in the same manner as in Example 1 using the stretched film 1a produced in Example 1, except that the heating temperature of the stretched film in the hot-air oven was changed to Tg-40°C.

<Comparative Example 3>

(Tension-applying Step)

A stretched film c-3b having an elongated shape was obtained in the same manner as in Example 1 using the stretched film 1a produced in Example 1, except that the heating temperature of the stretched film in the hot-air oven was changed to the same temperature as Tg (140°C).

<Comparative Example 4>

(Tension-applying Step)

A stretched film c-4b having an elongated shape was obtained in the same manner as in Example 1 using the stretched film 1a produced in Example 1, except that: the heating temperature of the stretched film in the hot-air oven was changed to Tg-15°C; and the tension to be applied to the stretched film was changed to 50 N.

<Comparative Example 5>

(Tension-applying Step)

A tension was applied in the same manner as in Example 1 using the stretched film 1a produced in Example 1, except that: the heating temperature of the stretched film in the hot-air oven was changed to Tg-15°C; and the tension to be applied to the stretched film was changed to 500 N. As a result, the film was ruptured.

<Comparative Example 6>

(Tension-applying Step)

A stretched film c-6b having an elongated shape was obtained in the same manner as in Example 1 using the stretched film 1a produced in Example 1, except that the stretched film was heated to Tg-15°C by contact heating using a heat roll.

The stretched films 1b to 7b, c-1b to c-4b, and c-6b obtained in Examples and Comparative Examples described above were each measured for its sagging amount, in-plane retardation, and alignment angle. In addition, the stretched films were each visually observed for its external appearance, and a case in which no wrinkle or flaw was found per unit area (1m$^2$) was evaluated as "satisfactory" and a case in which a wrinkle or a flaw was found was evaluated as "unsatisfactory". The results are shown in Table 1. In Table 1, the column "sagging reduction amount" shows a difference between the sagging amount of each film and the sagging amount of the stretched film c-1b (sagging amount of stretched film c-1b - sagging amount of each film). The sagging amount of the stretched film c-1b was 22 mm.

Table 1

| | Material | Tension-applying step | | | Measurement results | | | External appearance evaluation | |
|---|---|---|---|---|---|---|---|---|---|
| | | Heating temperature (°C) | Heating means | Tension (N) | Re(550) (nm) | Alignment angle (°) | Sagging reduction amount (mm) | Wrinkle | Flaw |
| Example 1 | Polyester carbonate resin | Tg-20 | Oven | 300 | 146.5 | 134.8 | 15 | Satisfactory | Satisfactory |
| Example 2 | Polyester carbonate resin | Tg-15 | Oven | 300 | 145 | 134.6 | 19 | Satisfactory | Satisfactory |
| Example 3 | Polyester carbonate resin | Tg-10 | Oven | 300 | 142 | 134.5 | 19 | Satisfactory | Satisfactory |
| Example 4 | Polyester carbonate resin | Tg-15 | Oven | 100 | 145 | 135 | 12 | Satisfactory | Satisfactory |
| Example 5 | Polyester carbonate resin | Tg-15 | Oven | 400 | 146 | 134 | 19 | Satisfactory | Satisfactory |
| Example 6 | Polyester carbonate resin | Tg-30 | Oven | 300 | 147 | 135 | 9 | Satisfactory | Satisfactory |
| Example 7 | Cycloolefin resin | Tg-15 | Oven | 300 | 147 | 135 | 15 | Satisfactory | Satisfactory |
| Comparative Example 1 | Polyester carbonate resin | | | | 147 | 135 | 0 | Satisfactory | Satisfactory |
| Comparative Example 2 | Polyester carbonate resin | Tg-40 | Oven | 300 | 147 | 135 | 5 | Satisfactory | Satisfactory |
| Comparative Example 3 | Polyester carbonate resin | Tg | Oven | 300 | 130 | 134.2 | 19 | Unsatisfactory | Satisfactory |

(continued)

| | Material | Tension-applying step | | | Measurement results | | | External appearance evaluation | |
|---|---|---|---|---|---|---|---|---|---|
| | | Heating temperature (°C) | Heating means | Tension (N) | Re (550) (nm) | Alignment angle (°) | Saggingreduction amount (mm) | Wrinkle | Flaw |
| Comparative Example 4 | Polyester carbonate resin | Tg-15 | Oven | 50 | 145 | 134.7 | 5 | Satisfactory | Satisfactory |
| Comparative Example 5 | Polyester carbonate resin | Tg-15 | Oven | 500 | | | - | | |
| Comparative Example 6 | Polyester carbonate resin | Tg-15 | Heat roll | 300 | 145 | 135 | 14 | Unsatisfactory | Unsatisfactory |

<Evaluation>

As shown in Table 1, according to the production method of each of Examples, a sagging reduction amount of 9 mm or more was obtained through the tension-applying step without significantly changing the retardation value and the alignment angle. In contrast, in each of Comparative Examples 2 and 4, the sagging reduction amount was small. This is probably because the heating temperature or the applied tension was insufficient. Meanwhile, in Comparative Example 5, the applied tension was excessively large, and as a result, the film was ruptured. In addition, in Comparative Example 3, in which the film was heated to Tg, although the sagging reduction amount was large, the optical characteristics were significantly changed, and besides, a wrinkle occurred. Further, in Comparative Example 6, in which contact heating means was used, a wrinkle and a flaw occurred. The stretched films 1b to 7b were each able to be taken up on a roll without any problem, but when the stretched films c-1b to c-4b and c-6b were each taken up on a roll, a wrinkle and a crumple occurred to impair the external appearance.

Industrial Applicability

The production method for a stretched film of the present invention is suitably used for the production of a retardation film, and as a result, can contribute to the production of an image display apparatus, such as a liquid crystal display apparatus (LCD) or an organic electroluminescence display apparatus (OLED).

Reference Signs List

10L    endless loop
10R    endless loop
20     clip
70     reference rail
100    stretching apparatus
200    circularly polarizing plate
210    polarizer
220    first protective film
230    second protective film
240    retardation film

**Claims**

1.   A production method for a stretched film, comprising:

   obliquely stretching a film having an elongated shape by:

      holding left and right end portions of the film with left and right variable pitch-type clips configured to have clip pitches changing in a longitudinal direction, respectively; and
      changing the clip pitch of the clips on at least one side out of the left and right clips;

   releasing the film from the clips and cooling the film; and
   applying a tension of from 100 N/m to 400 N/m to the film in a lengthwise direction thereof while heating the film to from Tg-30 °C to Tg-10°C by non-contact heating means.

2.   The production method according to claim 1, wherein the heating means is hot-air heating means.

3.   The production method according to claim 1 or 2, wherein a coefficient of heat transfer from the heating means to the film is from 50 W/m·K to 500 W/m·K.

4.   The production method according to any one of claims 1 to 3, wherein the applying a tension is performed by adjusting a tension applied to the film between conveying rolls.

5.   The production method according to any one of claims 1 to 4, wherein a material for forming the film contains a polycarbonate-based resin, a polyester-based resin, a polyester carbonate-based resin, a cycloolefin-based resin, a cellulose-based resin, or a mixture thereof.

6. The production method according to any one of claims 1 to 5, wherein the obliquely stretching a film is performed so that the film has an in-plane retardation Re (550) of from 100 nm to 180 nm.

7. A production method for an optical laminate, comprising:

obtaining a stretched film having an elongated shape by the production method of any one of claims 1 to 6; and continuously bonding an optical film having an elongated shape and the stretched film having an elongated shape with lengthwise directions of the optical film and the stretched film aligned with each other while conveying the optical film and the stretched film.

8. The production method for an optical laminate according to claim 7,
wherein the optical film is a polarizing plate, and
wherein the stretched film is a λ/4 plate.

[Fig.1]

[Fig.2]

[Fig.3]

# EP 3 748 407 A1

<table>
<tr><td colspan="2" align="center"><strong>INTERNATIONAL SEARCH REPORT</strong></td><td>International application No.<br>PCT/JP2019/000424</td></tr>
</table>

**A. CLASSIFICATION OF SUBJECT MATTER**

Int.Cl. G02B5/30(2006.01)i, B29C55/04(2006.01)i, B29L7/00(2006.01)n, B29L11/00(2006.01)n

According to International Patent Classification (IPC) or to both national classification and IPC

**B. FIELDS SEARCHED**

Minimum documentation searched (classification system followed by classification symbols)
Int.Cl. G02B5/30, B29C55/04, B29L7/00, B29L11/00

Documentation searched other than minimum documentation to the extent that such documents are included in the fields searched

| | |
|---|---|
| Published examined utility model applications of Japan | 1922-1996 |
| Published unexamined utility model applications of Japan | 1971-2019 |
| Registered utility model specifications of Japan | 1996-2019 |
| Published registered utility model applications of Japan | 1994-2019 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2017-9883 A (KONICA MINOLTA, INC.) 12 January 2017, paragraphs [0034], [0036], [0049], [0095], [0117], [0127]-[0133], [0183], [0189], [0193], [0194], fig. 1-4 <br> (Family: none) | 1-8 |
| A | JP 2017-109262 A (KONICA MINOLTA, INC.) 22 June 2017, entire text, fig. 1-7 <br> & CN 106881739 A & KR 10-2017-0071423 A | 1-8 |

☒ Further documents are listed in the continuation of Box C.  ☐ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 28.03.2019 | 09.04.2019 |

| Name and mailing address of the ISA/ <br> Japan Patent Office <br> 3-4-3, Kasumigaseki, Chiyoda-ku, <br> Tokyo 100-8915, Japan | Authorized officer <br><br> Telephone No. |
|---|---|

Form PCT/ISA/210 (second sheet) (January 2015)

19

**INTERNATIONAL SEARCH REPORT**

| International application No. |
|---|
| PCT/JP2019/000424 |

C (Continuation). DOCUMENTS CONSIDERED TO BE RELEVANT

| Category* | Citation of document, with indication, where appropriate, of the relevant passages | Relevant to claim No. |
|---|---|---|
| A | WO 2017/150495 A1 (ZEON CORPORATION) 08 September 2017, entire text, fig. 1 & CN 108603971 A & KR 10-2018-0118621 A | 1-8 |
| A | JP 2014-194483 A (NITTO DENKO CORPORATION) 09 October 2014, entire text, fig. 1-10 & US 2016/0062019 A1, entire text, fig. 1-10 & WO 2014/156624 A1 & EP 2980613 A1 & CN 105051579 A & KR 10-2015-0122740 A | 1-8 |
| A | JP 2011-215263 A (SUMITOMO CHEMICAL CO., LTD.) 27 October 2011, entire text, fig. 1 (Family: none) | 1-8 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4845619 B
- JP 2013054338 A
- JP 2014194482 A
- JP 2014238524 A
- JP 2014194484 A
- JP 2014194483 A
- JP 2012067300 A
- JP 3325560 B
- JP 2007161994 A